# DEMANDE DE BREVET EUROPEEN

(11) **EP 1 596 311 A1**
(43) Date de publication de la demande: **16.11.2005**
(21) Numéro de dépôt: 04291197.4
(22) Date de dépôt: 10.05.2004
(51) Int. Cl.: G06F 17/30

(54) **Système et procédé de gestion de tables de données**

(71) Demandeur: FRANCE TELECOM, 75015 Paris (FR)
(72) Inventeur: Valencot, Patrice, 01700 Miribel (FR); Poteau, Patrick, 59390 Lys lez Lannoy (FR); Magri, Gilbert, 78370 Plaisir (FR); Potier, Jacques, 45770 Saran (FR); Perin, Jean-Christophe, 75015 Paris (FR); Mera, Dominique, 69007 Lyon (FR)
(74) Mandataire: Bonnier, Patrick

(57) **Abrégé**

Système et procédé de gestion d'un ensemble de tables de données mises en mémoire dans au moins une base (15) de données.

Selon l'invention, ledit système (10) comprend au moins un dispositif constructeur (11) configuré pour créer au moins un lien daté pour établir une relation entre au moins deux desdites tables de données en fonction d'au moins une date et configuré pour créer au moins une règle datée pour contrôler la validité dudit lien daté, comprend au moins un administrateur (12) de données apte à contrôler la compatibilité d'au moins une desdites tables de données avec au moins un desdits liens datés et une desdites règles datées et comprend au moins un gestionnaire (24) des historiques apte à sauvegarder après ledit contrôle ledit lien daté et ladite règle datée dans ladite base (15) de données.

Application à la gestion de la validité des données desdites tables et à celle de la datation des liens entre lesdites tables de données.

## Description

La présente invention concerne un système et un procédé de gestion d'un ensemble de tables de données.

L'invention s'applique plus particulièrement à la gestion de la validité des données desdites tables et à celle de la datation des liens entre lesdites tables de données.

Actuellement, les bases de données permettent de décrire un modèle de données et de créer des règles de gestion pour les données présentes dans ladite base. La description du modèle de données correspond, pour l'ensemble des tables de données de la base, à la définition des tables et des liens existants entre les différentes tables de données. Dans les bases de données actuelles, les règles de gestion des données permettent uniquement de vérifier les propriétés affectées aux données, ainsi que des références croisées. Les propriétés d'une donnée sont les caractéristiques propres à ladite donnée, telles que le format, la taille, ... de ladite donnée. Une référence croisée permet d'indiquer dans une première table de données l'identité d'une deuxième table de données avec laquelle la première table est liée. La gestion possible dans les bases de données existantes est, par conséquent, très limitée.

Par ailleurs, les produits existants de gestion de tables de données utilisent ces fonctions d'une base de données, en proposant des procédures simples de mise à jour des données, grâce à des formulaires de saisie de données sans contrôle de la validité desdites données.

Lorsque ces produits de gestion sont exploités par plusieurs utilisateurs, ceux-ci peuvent indépendamment exécuter différentes mises à jour sur les données. Par conséquent, lesdits produits ne peuvent garantir à tout moment la cohérence des données entre elles.

De plus, ces produits ne permettent pas la prise en compte de paramètres spécifiques à l'utilisateur, fonction du domaine d'activité des utilisateurs des tables de données, par exemple une durée de validité des données.

Aussi le problème technique à résoudre par l'objet de la présente invention est de proposer un système et un procédé de gestion d'un ensemble de tables de données, mises en mémoire dans au moins une base de données, qui permettrait de remédier aux inconvénients des systèmes existants en évitant le manque de cohérence desdites données et le manque de synchronisation des données entre les différents utilisateurs.

La solution au problème technique posé consiste, selon la présente invention, en ce que ledit système comprend au moins un dispositif constructeur configuré pour créer au moins un lien daté pour établir une relation entre au moins deux desdites tables de données en fonction d'au moins une date et configuré pour créer au moins une règle datée pour contrôler la validité dudit lien daté, comprend au moins un administrateur de données apte à contrôler la compatibilité d'au moins une desdites tables de données avec au moins un desdits liens datés et une desdites règles datées et comprend au moins un gestionnaire des historiques apte à sauvegarder après ledit contrôle ledit lien daté et ladite règle datée dans ladite base de données.

De la même manière, ledit procédé de gestion d'un ensemble de tables de données, mises en mémoire dans au moins une base de données, est remarquable en ce qu'il comporte les étapes consistant à : - créer dans au moins un dispositif constructeur au moins un lien daté pour établir une relation entre au moins deux desdites tables de données en fonction d'au moins une date ; - créer dans ledit dispositif constructeur au moins une règle datée pour contrôler la validité dudit lien daté ; - contrôler dans au moins un administrateur de données la compatibilité d'au moins une desdites tables de données avec au moins un desdits liens datés et une desdites règles datées ; - après ledit contrôle, sauvegarder par au moins un gestionnaire des historiques ledit lien daté et ladite règle datée dans ladite base de données.

Ainsi lesdits système et procédé de gestion, conformes à l'invention, garantissent la cohérence des données par l'application de règles datées concernant lesdites tables de données. Un dispositif constructeur établit au moins une relation entre les différentes tables de données, en créant un lien daté entre deux tables de données. Puis, un administrateur de données vérifie que ledit lien daté et ladite règle datée sont compatibles avec ledit système de gestion et que lesdites tables de données concernées sont conformes aux liens datés et aux règles datées, qui ont été créés. Enfin, un gestionnaire des historiques sauvegarde tous les éléments dudit système de gestion.

Selon l'invention, ladite règle datée comporte au moins une condition à réaliser, séparément ou en combinaison, par lesdits liens datés, par lesdites tables de données.

Selon l'invention, ledit lien daté et ladite règle datée, séparément ou en combinaison, comportent au moins une caractéristique concernant une date de validité.

Selon l'invention, ledit lien daté décrit au moins un lien avec un sens défini par au moins une table de données source et au moins une table de données cible pour hiérarchiser lesdites tables de données.

Selon l'invention, dans un lien daté, ladite table de données cible est modifiée par rapport à ladite table de données source par ledit dispositif constructeur.

Un règle datée définit au moins une contrainte entre deux tables de données grâce à des conditions à réaliser, séparément ou en combinaison, par lesdits liens datés ou par lesdites tables de données. En particulier, lesdites contraintes tiennent compte de la hiérarchisation desdites tables de données, ainsi que des dates de validité.

Un lien daté et une règle datée permettent la création d'une période de validité en attribuant au moins une date de validité auxdites données concernées, audit lien ou à la dite règle créé. Chaque élément dudit système de gestion ou chaque relation entre lesdits éléments a une période de validité. Cette datation permet une gestion dans le temps des évolutions dans ledit système de gestion.

Un lien daté peut établir une relation hiérarchisée entre des tables de données. Le sens dudit lien daté classe lesdites tables de données en différents niveaux. Grâce auxdits liens datés, les tables de données dans la base de données sont organisées en niveaux supérieurs et inférieurs, du plus haut au plus bas niveau. De cette façon, toute action sur une première table de données correspond à une action sur une deuxième table de données, lorsque ladite deuxième table est liée avec la première par au moins un lien daté. Le dispositif constructeur permet de créer et de modifier le sens des liens datés.

Conformément à l'invention, ledit administrateur de données contrôle automatiquement au moins une modification, séparément ou en combinaison, d'une desdites tables de données, d'un desdits liens datés en fonction desdits liens datés.

La création des liens et des règles datés, les dates de validité et les conditions à réaliser permettent la création d'un lien daté avec une période de validité entre les différentes tables de données. De cette façon, ledit système de gestion de tables de données, conforme à l'invention, permet de contrôler à tout moment les tables de données de la base de données en permettant la gestion automatique de la cohérence des données lors d'une modification.

Au moment d'une modification, celle-ci est réalisée en fonction des liens et des règles datés existants et en tenant compte des périodes de validité de ces dits liens et règles. Si besoin, lesdites dates de validité sont mises à jour lors d'une modification.

Selon l'invention, ledit administrateur de données est configuré pour commander au moins un gestionnaire des historiques apte à mettre en mémoire, séparément ou en combinaison, une desdites tables de données, un desdits liens datés.

Selon l'invention, au moins un gestionnaire des historiques commande automatiquement la mise en mémoire d'au moins une modification avec une date de réalisation de ladite modification.

Selon l'invention, ledit gestionnaire des historiques commande au moins un archivage de chacune desdites modifications datées.

Tous les éléments dudit système de gestion sont sauvegardés automatiquement dans la base de données, ainsi que toute modification sur un des éléments dudit système de gestion. De cette manière, la cohérence des tables de données est préservée et tout manque de synchronisation entre lesdites tables de données est évité.

Quelque soit l'utilisateur qui accède au système de gestion, les tables de données sont conformes à la dernière mise à jour. Les différentes mises à jour, créations, suppressions, modifications, etc..., réalisées dans ledit système de gestion, sont sauvegardées avec la date de réalisation. Par conséquent, à tout moment, ledit système de gestion est contrôlable par des utilisateurs habilités en conservant une trace datée des différentes actions. Un archivage des différentes mises à jour permet de connaître l'état dudit système de gestion dans le passé, avec les différentes évolutions datées.

Selon l'invention, au moins un gestionnaire des règles contrôle automatiquement la conformité desdites règles datées en fonction desdits liens datés.

Selon l'invention, ledit contrôle de la conformité desdites règles datées est centralisé uniquement dans ledit gestionnaire des règles.

Selon l'invention, au moins un gestionnaire des contraintes contrôle automatiquement la réalisation d'au moins une condition desdites règles datées en fonction desdits liens datés.

Selon l'invention, au moins une erreur est transmise vers au moins un utilisateur par ledit gestionnaire des règles après lesdits contrôles.

Lors d'une modification, soit une création ou une suppression ou un changement d'un élément dudit système de gestion, la gestion de la cohérence entre lesdites tables de données est réalisée de façon centralisée par un gestionnaire des règles, unique dans ledit système de gestion, qui contrôle la conformité des règles datées et la mise en oeuvre desdites règles datées en tenant compte des liens existants entre les tables de données.

Ensuite, au moins un gestionnaire des contraintes contrôle la réalisation des conditions desdites règles datées. A nouveau, cette réalisation est effectuée en tenant compte des liens existants entre les tables de données.

En cas de contrôle négatif, une liste d'erreurs est transmise vers les utilisateurs dudit système de gestion.

Selon l'invention, ledit système de gestion comprend au moins un dispositif importateur apte à importer des données vers ladite base de données.

Selon l'invention, ledit système de gestion comprend au moins un dispositif exportateur apte à exporter des données à partir de ladite base de données.

Permettant des évolutions, de nouvelles tables de données peuvent être importées dans la base de données vers ledit système de gestion. De même, par exemple après une modification, des tables de données peuvent être exportées à partir de ladite base de données.

Conformément à l'invention, ledit administrateur de données est configuré pour commander au moins un gestionnaire des droits apte à contrôler au moins un droit d'un utilisateur dudit système de gestion.

Conformément à l'invention, au moins un gestionnaire des droits modifie au moins un droit d'un utilisateur dudit système de gestion.

Les divers utilisateurs du système de gestion des tables de données peuvent avoir des droits différents. Certains utilisateurs ne peuvent que consulter les tables de données. D'autres utilisateurs sont habilités à modifier des données. D'autres encore peuvent créer, importer ou exporter des tables de données.

Conformément à l'invention, ledit administrateur de données est configuré pour commander au moins un gestionnaire des tâches apte à gérer au moins une modification, séparément ou en combinaison, d'une desdites tables de données, d'un desdits liens datés.

Conformément à l'invention, au moins un gestionnaire des tâches commande l'interdiction d'accès auxdites tables de données pendant la durée d'une modification.

Plusieurs utilisateurs peuvent réaliser une modification, soit une création ou une suppression ou le changement d'un élément, par exemple la mise à jour d'une date de validité. Pour maintenir la cohérence à tout moment dans la base de données, pendant ladite modification par un premier utilisateur, un gestionnaire des tâches peut interdire toute autre modification pour un deuxième utilisateur. De plus, ledit gestionnaire des tâches contrôle les actions des différents utilisateurs en fonction des droits de chacun.

Conformément à l'invention, ledit dispositif constructeur est paramétrable pour modifier automatiquement, séparément ou en combinaison, ledit, ledit administrateur de données, ledit gestionnaire des droits, ledit gestionnaire des tâches, ledit gestionnaire des règles, ledit gestionnaire des contraintes, ledit gestionnaire du statut, ledit gestionnaire des historiques, au moins un dispositif importateur, au moins un dispositif exportateur.

Le système de gestion de tables de données permet des évolutions en fonction des besoins des utilisateurs. Il est prévu pour un fonctionnement quelque soit les tables de données, les liens, les règles, les dates, les conditions, le domaine d'activité des utilisateurs, etc... Il est adapté à chaque exploitation selon les paramètres sauvegardés, sans aucune modification directe dudit système de gestion.

Le dispositif constructeur permet l'évolution des tables de données, des tables de liens, des différents liens présents, des règles, des droits des utilisateurs. L'administrateur de données permet l'adaptation automatique dudit système de gestion aux évolutions créées à partir dudit dispositif constructeur, sans modification du système de gestion lui-même.

La description qui va suivre en regard des dessins annexés, donnés à titre d'exemple non limitatif, fera bien comprendre en quoi consiste l'invention et comment elle peut être réalisée.

La figure 1 représente l'architecture générale d'un système de gestion d'un ensemble de tables de données, conforme à l'invention.

La figure 2 est un schéma représentant des liens entre les tables de données dudit système de gestion.

La figure 3 représente les échanges d'informations dans ledit système de gestion de tables de données.

La figure 4 est une représentation des étapes d'un procédé de gestion d'un ensemble de tables de données, conforme à l'invention, lors d'une création.

La figure 5 est une représentation des étapes dudit procédé de gestion de tables de données lors d'une modification.

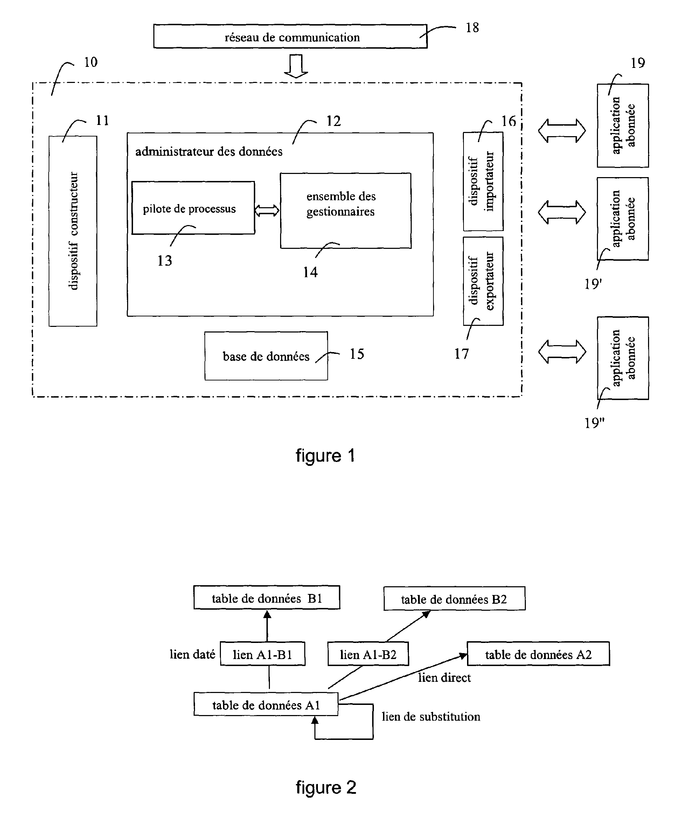

Un système 10 de gestion de tables de données, conforme à l'invention, comprend au moins un dispositif constructeur 11 et au moins un administrateur 12 de données. Il peut également comprendre au moins un dispositif importateur 16 et au moins un dispositif exportateur 17. Ledit système 10 de gestion de tables de données, représenté en figure 1, permet de gérer un ensemble de tables de données mises en mémoire dans au moins une base 15 de données. Ladite base 15 de données peut physiquement être incluse ou non audit système 10 de gestion de tables de données.

Lesdites données peuvent être de toute nature. Ladite base 15 de données peut être utilisée dans différents domaines d'activité, par exemple un catalogue de produits avec la liste des pièces détachées correspondant à ces produits, les quantités en stock, ... ; un répertoire des agences d'une entreprise avec la liste des adresses, des salariés, des horaires, ... ; un système de références des comptes d'une entreprise avec l'organisation de ladite entreprise, les centres de coût et de profit, les zones géographiques ; etc... Les différents utilisateurs du système de gestion souhaitent exploiter et modifier les données mises en mémoire dans au moins une base 15 de données, en conservant la cohérence desdites données quelque soit les évolutions réalisées.

Les utilisateurs sont raccordés audit système 10 de gestion de tables de données par l'intermédiaire d'un réseau 18 de communication de nature différente selon le domaine d'activité desdits utilisateurs, par exemple un réseau intranet dans une entreprise ou bien le réseau Internet via un navigateur existant.

Comme le montre la figure 2, des liens existent entre les différentes tables de données pour établir une ou plusieurs relations entre lesdites tables. Lesdits liens peuvent être de différents types. Un lien est appelé lien direct quand il établit une relation directe entre deux tables de données différentes (lien entre les tables de données A1 et A2). Un lien est appelé lien de substitution, quand il indique le remplacement d'un élément d'une table A1 par un autre élément de la même table de données A1.

En plus de ces dits liens directs ou de substitution, ledit système 10 de gestion de tables de données, conforme à l'invention, comprend au moins un dispositif constructeur 11, qui permet la création d'au moins un lien daté pour établir une relation entre lesdites tables de données en fonction d'au moins une date, ainsi que la création d'au moins une règle datée pour contrôler la validité dudit lien daté.

Ledit système 10 de gestion comprend ledit dispositif constructeur 11 configuré pour créer au moins un lien daté pour établir une relation entre au moins deux tables de données en fonction d'au moins une date et configuré pour créer au moins une règle datée pour contrôler la validité dudit lien daté.

Ledit système 10 de gestion comprend également un administrateur 12 de données apte à contrôler la compatibilité d'au moins une desdites tables de données avec au moins un desdits liens datés et une desdites règles datées.

Le lien daté décrit un lien avec un sens défini par une table de données source et au moins une table de données cible pour hiérarchiser lesdites tables de données.

Ledit lien daté A1-B1 établit une relation, dont le sens est défini grâce à une table source A1 appelée "fils" et une table cible B1 appelée "père". Un père peut avoir plusieurs fils (lien A1-B2) et un fils peut avoir plusieurs pères. Par conséquent, une table de données peut être liée à plusieurs autres tables de données (liens A-B1 et A1-B2). De cette façon, l'ensemble des tables de données est hiérarchisé avec des niveaux inférieurs et des niveaux supérieurs.

De plus, lesdits liens datés et lesdites règles datées peuvent comporter au moins une caractéristique concernant une date de validité, en particulier une date de début de validité (ou DDV) et une date de fin de validité (ou DFV). Lesdites dates DDV et DFV définissent la période de validité des données.

Lesdits liens datés peuvent, par exemple, être organisés et sauvegardés dans une ou plusieurs tables de liens.

Une règle datée permet de définir des contraintes entre au moins deux tables de données. Ladite règle datée comporte au moins une condition à réaliser, séparément ou en combinaison, par lesdits liens datés, par lesdites tables de données. Une règle datée peut par exemple contenir au moins les conditions suivantes : la période de validité d'un fils devra être incluse dans la période de validité d'un père ; la période de validité d'un lien devra être incluse dans la période de validité du père et du fils. Comme les règles sont datées, il suffit de créer une nouvelle règle applicable à une date définie pour changer de règle Pour faciliter les créations et les évolutions du système, il est possible de reproduire automatiquement une règle existante dans une autre table de données.

Ledit système 10 de gestion vérifie la cohérence entre les différentes règles. De façon générale, pour maintenir la cohérence, les liens datés entre différentes tables doivent être cohérents avec les dates de l'élément père et les dates de l'élément fils. De plus, la création de certains éléments d'une table peut entraîner la création d'éléments d'autres tables ou bien la création de liens. Toute modification, soit une création ou une suppression ou un changement d'un élément dudit système de gestion, est réalisée par étape successive en suivant l'ordre des niveaux hiérarchiques. Les tables de données dans la base de données sont organisées en niveaux supérieurs et inférieurs, du plus haut au plus bas niveau. De cette façon, toute action sur une première table de données correspond à une action sur au moins une deuxième table de données, lorsque ladite deuxième table est liée avec la première par au moins un lien daté.

De plus, les caractéristiques de l'élément doivent avoir un format compatible avec ledit système de gestion, tel que le format, la taille, ... dudit élément.

Ledit dispositif constructeur 11 permet de faire évoluer la description du "modèle" de données. Ledit "modèle" de données se compose des différents éléments, c'est-à-dire, pour l'ensemble des tables de données, la définition des tables datées ou non datées, des différents liens présents (lien direct, lien de substitution ou lien daté) et des règles de gestion associées, ainsi que la définition des habilitations existantes. Ledit "modèle" est sauvegardé dans la base 15 de données, ce qui permet une modification de chacun des éléments dudit "modèle".

Pour les mêmes tables de données, plusieurs "modèles" peuvent être créés et sauvegardés, par exemple lors de l'utilisation desdites tables de données par plusieurs entreprises. Dans ce cas, la gestion est multi sociétés et peut être différentes selon les sociétés pour un même système de gestion. Les données des différentes tables peuvent également être en plusieurs langues.

Ledit "modèle" défini par le dispositif constructeur 11 peut être modifié lors d'une re-affectation pour réorganiser les liens existants. Le sens défini dans les liens datés peut être modifié, dont la modification du "père" pour un "fils", par exemple lorsque qu'une agence existante anciennement rattachée à un centre X est rattachée à un centre Y. Les relations existantes entre les tables de données peuvent être modifiées, par exemple, le père peut être modifié pour un fils donné. Dans un lien daté, ladite table de données cible est modifiée par rapport à ladite table de données source par ledit dispositif constructeur 11.

Ledit administrateur 12 de données permet l'adaptation dudit système 10 de gestion, conforme à l'invention, aux évolutions du "modèle" de données, sans avoir à modifier directement ledit système 10 de gestion. Ledit administrateur 12 de données contrôle automatiquement toute modification, séparément ou en combinaison, d'une desdites tables de données ou d'un desdits liens datés en fonction desdits liens datés. Cette adaptation aux évolutions est automatique grâce à un ensemble de gestionnaires 14. Les fonctionnalités de l'ensemble des gestionnaires 14 sont prévues pour adapter et paramétrer ledit système 10 de gestion des tables de données, en fonction des besoins des utilisateurs. Chaque fonction est réalisée par un gestionnaire, ce qui apporte une importante adaptabilité pour une gestion très souple et dynamique dudit système de gestion de tables de données. Les différents gestionnaires 14 peuvent physiquement être inclus ou non audit administrateur 12 de données.

Les droits de chacun des utilisateurs, avant toute action sur un élément dudit système 10 de gestion (données, tables, ...), sont vérifiés par au moins un gestionnaire des droits. Ledit administrateur 12 de données est configuré pour commander au moins un gestionnaire des droits apte à contrôler au moins un droit d'un utilisateur dudit système 10 de gestion. Ledit gestionnaire des droits modifie un droit d'un utilisateur dudit système 10 de gestion. Les droits peuvent, par exemple, tenir compte du niveau hiérarchique de l'élément de la base 15 de données, niveau supérieur ou inférieur. Les utilisateurs peuvent accéder ou modifier selon lesdits droits. Selon les droits, à partir d'un élément donné, ledit utilisateur accède ou modifie les éléments qui sont hiérarchiquement inférieurs dans la base 15 de données.

La cohérence des actions entre les différents équipements dudit système 10 de gestion est assurée par au moins un gestionnaire des tâches. Ledit administrateur 12 de données est configuré pour commander au moins un gestionnaire des tâches apte à gérer au moins une modification, séparément ou en combinaison, d'une desdites tables de données ou desdits liens datés. Ledit gestionnaire des tâches identifie et bloque l'accès aux éléments dudit système en cours de modification, pour éviter les accès concomitants. Ledit gestionnaire des tâches commande l'interdiction d'accès auxdites tables de données pendant la durée d'une modification.

La vérification de la cohérence des données est effectuée par au moins un gestionnaire 21 des règles. Ledit administrateur 12 de données est configuré pour commander au moins un gestionnaire 21 des règles apte à contrôler la conformité desdites tables de règles. Ledit gestionnaire 21 des règles contrôle automatiquement la conformité desdites règles datées en fonction desdits liens datés.

La mise en cohérence des données grâce aux règles est gérée par un pilote 13 de processus (ou workflow), commandé par au moins un gestionnaire 22 des contraintes. Ledit gestionnaire 22 des contraintes évite la persistance des incohérences et commande la levée desdites incohérences. Ledit administrateur 12 de données est configuré pour commander au moins un gestionnaire 22 des contraintes apte à contrôler la réalisation d'au moins une condition d'une règle datée. Ledit gestionnaire 22 des contraintes contrôle automatiquement la réalisation d'au moins une condition desdites règles datées en fonction desdits liens datés.

La mise à disposition des données est gérée par au moins un gestionnaire 23 du statut, qui permet l'utilisation des données par plusieurs utilisateurs. Ledit gestionnaire 23 du statut créé automatiquement un statut pour chacun des éléments en fonction des incohérences correspondant auxdits éléments du système 10 de gestion. Ledit administrateur 12 de données est configuré pour commander au moins un gestionnaire 23 du statut apte à autoriser la mise à disposition, séparément ou en combinaison, d'une desdites tables de données ou d'un desdits liens datés. Ledit gestionnaire 23 du statut créé automatiquement un statut pour autoriser la mise à disposition, séparément ou en combinaison, d'une desdites tables de données ou d'un desdits liens datés. Ledit statut est validé et la mise à disposition est autorisée uniquement quand toutes les conditions d'au moins une règle datée sont réalisées. Selon les paramètres, le statut peut être modifiable ou non modifiable.

Ledit gestionnaire 24 des historiques met en mémoire en particulier toutes les modifications réalisées, ainsi que l'ensemble des relations existantes entre les différents éléments dudit système de gestion. Ledit administrateur 12 de données est configuré pour commander au moins un gestionnaire 24 des historiques apte à mettre en mémoire, séparément ou en combinaison, une desdites tables de données ou un desdits liens datés. Ledit gestionnaire 24 des historiques commande automatiquement la mise en mémoire d'au moins une modification avec une date de réalisation de ladite modification. Les différents états du "modèle" sont archivés dans ledit gestionnaire 24 des historiques avec les dates correspondantes. A tout moment, un contrôle peut être réalisé par un utilisateur habilité, qui retrouve l'état existant à une date donnée.

Ledit administrateur 12 des données permet une mise à jour soit sur un seul élément dudit système de gestion, soit sur plusieurs ou tous les éléments datés ou non datés. De façon générale, il réalise un contrôle permanent de la validité desdits éléments et de leur cohérence grâce aux différents gestionnaires. Il comprend également ledit pilote 13 de processus (ou workflow), qui gère les actions des utilisateurs pour corriger les incohérences. Au final, il valide les modifications et supprime le blocage de l'accès aux éléments en cours de modification.

Ledit administrateur 12 de données réalise donc la validation finale desdites modifications en autorisant les modifications lorsque toutes les règles sont validées. Dans ce cas, la mise en mémoire de ladite modification est alors possible, ainsi que le déblocage de l'interdiction d'accès auxdites données.

Tous les éléments sont sauvegardés dans la base 15 de données, ainsi que toutes les modifications réalisées en conservant une trace datée des différentes actions. Ledit gestionnaire 24 des historiques est apte à sauvegarder après lesdits contrôles, en particulier, lesdits liens datés et lesdites règles datées dans la base 15 de données.

De cette manière, la cohérence des tables de données est préservée et tout manque de synchronisation entre lesdites tables de données est évité. Quelque soit l'utilisateur qui accède au système de gestion, les tables de données sont conformes à la dernière mise à jour. Les différentes mises à jour, créations, suppressions, modifications, etc..., réalisées dans ledit système de gestion, sont sauvegardées avec la date de réalisation. Par conséquent, à tout moment, ledit système de gestion est contrôlable par des utilisateurs habilités en conservant une trace datée des différentes actions. Un archivage des différentes mises à jour permet de connaître l'état dudit système de gestion dans le passé, avec les différentes évolutions datées. Ledit gestionnaire 24 des historiques commande l'archivage de chacune desdites modifications datées.

Ledit dispositif importateur 16 permet l'importation de données vers ledit système 10 de gestion, par exemple en provenance d'autres bases de données extérieures audit système 10 de gestion. Ledit système 10 de gestion peut comprendre un dispositif importateur 16 apte à importer des données vers la base 15 de données. Ledit dispositif exportateur 17 permet la diffusion de données dudit système de gestion, en particulier vers des applications abonnées 19, 19', 19". Ledit système 10 de gestion peut également comprendre un dispositif exportateur 17 apte à exporter des données à partir de ladite base 15 de données.

Les applications abonnées 19, 19', 19" exploitent les données gérées par ledit système 10 de gestion. Ce sont en général des applications de planification des ressources d'une entreprise (ou ERP, Enterprise Resource Planning). Par exemple, selon le domaine d'activité des utilisateurs, la liste du stock des pièces détachées d'un produit ou la liste des agences d'une entreprise ou bien la gestion des données comptable dans une entreprise, etc...

Le système et le procédé de gestion de tables de données comprennent un ensemble de paramétrages permettant de faire évoluer en particulier la description du "modèle" de données, ainsi que les règles de cohérence. Des règles habituelles à une utilisation, correspondant par exemple à des domaines d'activité définis, sont préexistantes et peuvent être activées dans ledit système 10 de gestion. Des règles "de bon sens" sont également automatiquement prédéfinies, telles que la date de fin de validité est supérieure à la date de début de validité. Des droits ou des domaines d'habilitation peuvent également être prédéfinis en fonction de profils habituels d'utilisateurs, correspondants aux métiers du domaine d'activité desdits utilisateurs. Il est également possible de paramétrer l'initialisation et l'export de données vers les différentes applications abonnées 19, 19', 19", utilisatrices des données.

Dans ledit système 10 de gestion, le dispositif constructeur 11 est paramétrable pour modifier automatiquement, séparément ou en combinaison, ledit administrateur 12 de données, ledit gestionnaire des droits, ledit gestionnaire des tâches, ledit gestionnaire 21 des règles, ledit gestionnaire 22 des contraintes, ledit gestionnaire 23 du statut, ledit gestionnaire 24 des historiques, au moins un dispositif importateur 16, au moins un dispositif exportateur 17. De cette façon, Les utilisateurs autorisés peuvent également adapter la gestion des données gérées par ledit système de gestion en fonction de chaque entreprise cliente. Avec les règles, les profils et les utilisateurs prédéfinis, ledit système 10 de gestion est paramétrable selon les domaines d'activité, sans aucune modification directe dudit système 10 de gestion.

La souplesse dudit système de gestion est réalisée grâce au traitement des règles par le gestionnaire 21 des règles, qui sont sauvegardées dans ladite base 15 de données.

Ledit système 10 de gestion permet une gestion souple des données grâce à la modification de la structure du "modèle" des données ou à l'ajout de nouvelles tables de données, sans aucune modification directe dudit système de gestion. Le système 10 de gestion de tables de données permet des évolutions en fonction des besoins des utilisateurs. Il est prévu pour un fonctionnement quelque soit les tables de données, les liens, les règles, les dates, les conditions, le métier des utilisateurs, etc... Il est adapté à chaque exploitation selon les paramètres sauvegardés, sans aucune modification directe dudit système de gestion.

Comme mentionné précédemment, le "modèle" de données se compose des différents éléments, c'est-à-dire lesdites tables de données ou lesdits liens datés ou non datés, lesdites règles de gestion associées, des liens entre lesdits éléments, la définition des droits existants, etc... Ledit "modèle" est sauvegardé dans la base 15 de données, ce qui permet une modification de chacun des éléments dudit "modèle".

De manière à rendre le paramétrage possible de tous les éléments dudit "modèle" de données, le système 10 de gestion est prévu pour tout type de fonctionnement, quelque soit les tables de données, les liens, les règles, les dates, les utilisateurs, les applications abonnées, etc... existants. Ledit système 10 de gestion contient donc toutes les fonctions de base de façon générale et générique. Ensuite, il est adapté à chaque exploitation selon les paramétrages réalisés et sauvegardés dans au moins une base de données, sans aucune modification dudit système de gestion. De même, ledit système 10 est adaptable à toute évolution en cours d'exploitation et le paramétrage prévu initialement permet toutes les modifications des différentes éléments du "modèle" de données, qui sont à nouveau sauvegardées dans au moins une base 15 de données.

En particulier, la génération des écrans de visualisation est dynamique et adaptée selon les paramétrages existants. Elle est évolutive en tenant compte des modifications réalisées. De ce fait, une modification génère automatiquement au moins un changement pour la visualisation, séparément ou en combinaison, d'une desdites tables de données, d'une desdites tables de liens. Par exemple, les écrans de visualisation permettent la visualisation de la liste des attributs d'un élément en respectant les caractéristiques définies dans le "modèle" de données, la taille des champs, l'ordre, etc...

Ledit dispositif constructeur 11, qui permet de faire évoluer la description du "modèle" de données, ainsi que les dispositifs importateur 16 et exportateur 17, facilitent la gestion souple et dynamique des données.

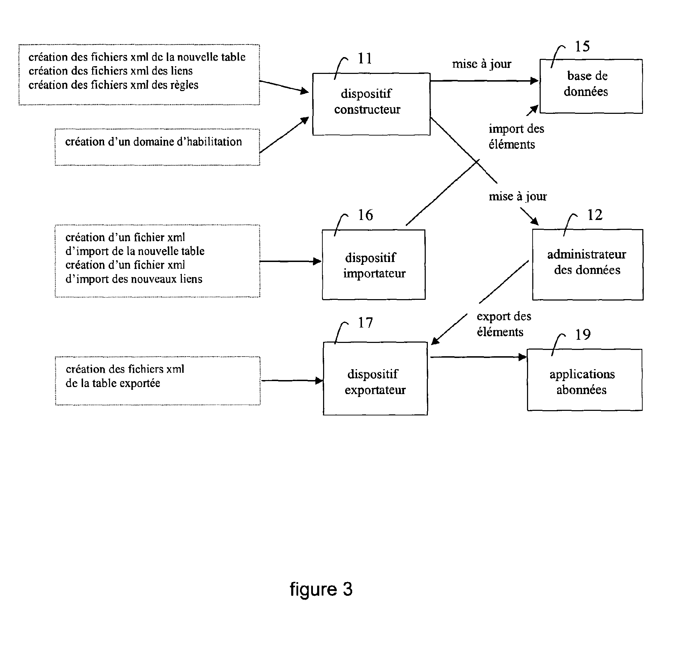

La description dudit "modèle" peut être modifié dans ledit système 10 de gestion conforme à l'invention, comme représenté dans la figure 3, avec les échanges d'informations dans ledit système 10 de gestion.

Une modification peut correspondre à l'ajout ou la suppression d'un produit dans le catalogue ou bien à la création ou la fermeture d'une agence de l'entreprise, etc... selon le domaine d'activités des utilisateurs.

Une modification dudit "modèle" est décrite généralement grâce à au moins un fichier au format XML (soit Extensible Markup Language, langage html évolué permettant la personnalisation des balises ou markup), habituellement utilisé pour la description de données ou tout autre format équivalent de description de données. Ledit fichier au format XML permet de créer, de modifier, de supprimer une table de données ou un lien ou bien une règle. Ledit dispositif constructeur 11 vérifie la validité dudit fichier reçu, convertit les commandes définies dans ledit fichier XML sous la forme d'une ou plusieurs modifications à réaliser par ledit système 10 de gestion et sauvegardées dans la base de données, puis valide ladite modification de la base de données. Ledit système 10 de gestion, complètement paramétrable, va directement et automatiquement générer les modifications correspondantes pour la prise en compte dans le fonctionnement dudit système 10 de gestion.

Ledit dispositif importateur 16 permet d'alimenter ladite table de données nouvellement crée. Un deuxième fichier, en particulier au format XML, reçu par le dispositif importateur 16, permet l'importation des données de la nouvelle table. Ledit deuxième fichier XML décrit la structure de fichiers texte contenant les données à importer. Le dispositif importateur 16 sollicite le gestionnaire 21 des règles dudit administrateur 12 de données pour vérifier que les données importées sont compatibles avec les règles dudit système 10 de gestion. Si ce n'est pas le cas, ladite table n'est pas crée dans la base de données et une liste d'erreurs des éléments en anomalie est générée par le système 10 de gestion de tables. Ledit système 10 de gestion transmet au moins une erreur vers au moins un utilisateur par ledit gestionnaire 21 des règles desdites tables de données.

Ledit dispositif exportateur 17 permet de transmettre des données vers des applications abonnées 19, 19', 19", extérieures audit système 10 de gestion de tables. Le format de transmission des données, ainsi que la fréquence de transmission, sont également définis dans un troisième fichier, en particulier au format XML. Le dispositif exportateur 17 fournit, par exemple, soit un fichier contenant la totalité des données à exporter, soit seulement les données créées ou modifiées depuis le précédent export, soit uniquement les données créées ou modifiées entre deux dates.

Pour aider à la compréhension de l'invention, les différentes étapes d'un procédé de gestion d'un ensemble de tables de données, conforme à l'invention, sont à présent précisées.

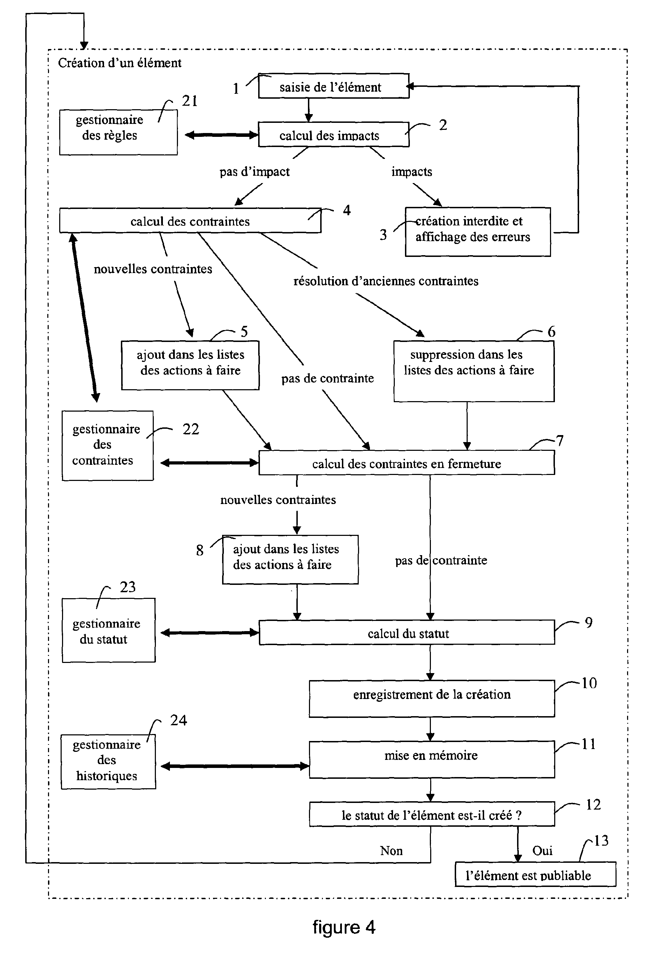

A titre d'exemple d'une action effectuée sur ledit système 10 de gestion, les principales étapes mises en oeuvre lors d'une création par un procédé de gestion de tables de données, conforme à l'invention, sont représentées par la figure 4.

Une fois le "modèle" défini par le dispositif constructeur 11, un utilisateur habilité peut réaliser une demande de création de tout élément dudit système de gestion. Ladite demande de création peut concerner tout élément, aussi bien un élément d'une table de données, un nouveau lien daté ou non daté entre lesdites tables, etc..., pour lesquels la procédure de création est similaire, et appelé "un élément" pour simplifier la description.

Ledit utilisateur se connecte au système 10 de gestion par exemple par un réseau privé local d'entreprise ou tout autre réseau 18 de communication permettant la transmission de données (réseau Internet ou IP ou ATM ou autre).

Une création d'élément est une procédure récursive, qui peut être répétée un nombre indéfini de fois par l'activation de la même procédure, c'est-à-dire que ladite création peut commander la création d'autres éléments de niveaux hiérarchiques inférieurs, pouvant elle-même commander la création d'éléments supplémentaires et ainsi de suite. Lorsque les éléments des niveaux les plus bas ont pu être créés, la création des autres éléments peut être réalisée en remontant successivement les niveaux de la hiérarchie existante dans la base de données.

Pour simplifier la figure 4, le gestionnaire des droits n'est pas mentionné. Cependant, au moins un utilisateur ne peut agir sur au moins un élément dudit système 10 de gestion que si celui-ci est un utilisateur habilité pour ladite action sur ledit élément.

Les divers utilisateurs du système de gestion des tables de données peuvent avoir des droits différents. Certains utilisateurs ne peuvent que consulter les tables de données. D'autres utilisateurs sont habilités à modifier des données. D'autres encore peuvent créer, importer ou exporter des tables de données. De ce fait, il existe différents niveaux d'habilitations qui sont paramétrables par l'intermédiaire du gestionnaire des autorisations.

Pour la création d'un élément dans une table de données par un utilisateur, les différents attributs dudit élément à créer sont saisis en respectant la taille, le format, ... des données (étape 1).

Lorsque des tables de données sont importées dans la base de données, la procédure de création est similaire à la demande de création réalisée par un utilisateur, de manière à créer les relations par les tables de liens, la hiérarchisation dans ladite base 15 de données et les tables de règles correspondants auxdites tables de données importées.

Le gestionnaire 21 des règles calcule les impacts et vérifie si les règles existantes dans ledit système de gestion, sont ou non respectées (étape 2). Lorsque des règles existantes ne sont pas respectées, la création est arrêtée et interdite. Un affichage des erreurs, réalisées lors de la création, est transmis vers l'utilisateur (étape 3). Au moins une erreur est transmise vers un utilisateur par ledit gestionnaire 21 des règles après lesdits contrôles.

Lorsque les règles existantes sont respectées, le gestionnaire 22 des contraintes créé au moins une contrainte correspondant audit élément en cours de création (étape 4). Les contraintes sont les conditions à réaliser, indiquées dans les règles, en fonction des dates de validité et de la hiérarchisation de la base 15 de données. Les contraintes sont ajoutées dans une liste des actions à faire (étape 5).

De façon générale, une liste des actions à faire est la description de l'enchaînement des actions à réaliser et l'indication de l'auteur desdites actions. Les actions peuvent être aussi une création comme toute modification de tout élément ou d'un lien ou bien une suppression d'un élément ou d'un lien, etc...

Le gestionnaire 22 des contraintes créé autant de contraintes que de règles non respectées. Lesdites contraintes créées sont ajoutées et sauvegardées dans la liste des actions à faire correspondant à ladite création.

La création dudit élément peut ne créer aucune contrainte correspondant audit élément en cours de création ou bien permettre la résolution de contraintes existantes pour d'autres éléments (étape 6). De ce fait, les anciennes contraintes résolues sont à nouveau automatiquement supprimées des listes des actions à faire.

Ledit gestionnaire 22 des contraintes vérifie également la ou les nouvelles contraintes créées et résolues qui peuvent être fermées (étape 7), dans le cas de la création d'un élément en liaison avec un élément principal d'une demande de fermeture, tel que décrit précédemment. La fermeture de certaines contraintes peut créer de nouvelles contraintes à ajouter dans les listes à faire (étape 8). Les listes des actions à faire sont sauvegardées dans la base 15 de données.

Ledit gestionnaire 21 des règles contrôle automatiquement la conformité des règles datées en fonction des liens existants. Ledit gestionnaire 22 des contraintes contrôle automatiquement la réalisation d'au moins une des conditions desdites règles datées en fonction des liens existants. Ledit gestionnaire 22 des contraintes vérifie la ou les contraintes en création, qui sont résolues lors de la création dudit élément. Lorsque une contrainte est résolue, celle-ci est supprimée d'une liste des actions à faire pour ladite création.

Pour résoudre une contrainte créée, il faut faire disparaître un élément dans une liste des actions à faire. Comme mentionné précédemment, une demande de création d'un élément principal peut commander d'autres demandes de création sur des éléments de niveaux hiérarchiques inférieurs dans la base de données. Toutes les contraintes doivent être résolues pour vider la liste des actions à faire correspondant audit élément principal à créer. Autant de demande de création d'un élément sont donc effectuées jusqu'à ce que ladite liste des actions à faire soit vide.

Quand toutes les contraintes créées ou générées par une même demande de création sont résolues, ladite demande est valable car la liste des actions à faire est vide. La demande de création peut alors être validée et l'élément principal, que l'utilisateur souhaite créer, est effectivement créé. Ladite création est sauvegardée dans la base 15 de données par ledit gestionnaire 24 des historiques.

Une fois les contraintes et les listes à faire gérées, le gestionnaire 23 du statut créé le statut correspondant audit élément en cours de création (étape 9). Ledit statut est validé lorsque toutes les contraintes en création sont résolues. Sinon, le statut est non validé. Le statut du ou des éléments, liés audit élément en cours de création, est également validé lorsque toutes les contraintes correspondant à tous les éléments liés sont résolues.

La création d'un élément est enregistrée lorsque le statut est créé (étape 10).

Toutes les modifications, ajout ou suppression dans au moins une liste des actions à faire sont sauvegardées dans la base 15 de données par ledit gestionnaire 24 des historiques, ainsi que le statut et les liens associés (étape 11).

La création d'un nouvel élément commande généralement une ou plusieurs demandes de création pour un autre élément ou bien pour un nouveau lien. Chaque nouvelle demande de création modifie au moins une liste des actions à faire, en créant au moins une contrainte correspondant à ladite demande de création. Chaque élément effectivement créé supprime généralement au moins une contrainte dans au moins une liste des actions à faire pour ladite création d'un élément. Quoi qu'il en soit, le statut de tous les éléments, liés audit élément en cours de création, n'est validé que lorsque toutes les contraintes sont résolues. Sans statut, ledit élément ne peut être publiable (étape 12). Lorsque le statut est validé, ledit élément créé est publiable, c'est-à-dire qu'il peut être mis à disposition (étape 13). La mise à disposition d'un élément du système 10 de gestion permet soit l'accès audit élément par les applications abonnées 19, 19', 19", soit l'exportation dudit élément.

Une règle peut être définie comme obligatoire ou facultative. Si la règle st obligatoire, les contraintes doivent être obligatoirement résolues avant suppression dans la liste des actions à faire. Par contre, il est possible de ne pas tenir compte d'une règle facultative pour la création de l'élément correspondant.

Avec le statut existant, l'élément est créé et sauvegardé dans ladite base 15 de données par le gestionnaire 24 des historiques avec lesdits liens existants. Après lesdits contrôle, le gestionnaire 24 des historiques sauvegarde ledit élément, par exemple un lien daté, dans la base 15 de données.

Ledit gestionnaire 24 des historiques, qui met à disposition les données vers des applications abonnées 19, 19', 19" audit système de gestion, sauvegarde également le statut dudit élément créé. Lorsque ledit statut est validé, ledit élément créé peut être exporté vers lesdites applications abonnées extérieures 19, 19', 19". Sinon, ledit élément n'est pas exportable et n'est utilisable que dans ladite base 15 de données.

De façon similaire, les principales étapes du procédé de gestion des tables sont identiques dans le cas de modification d'un élément ou d'un lien existant dans la base 15 de données, ainsi que dans le cas de la suppression d'un élément ou d'un lien. Pour simplifier la description, de façon générale, toutes ces actions sont appelées une modification.

Le procédé de gestion de tables de données garantit la cohérence lors de toute modification, grâce au gestionnaire 21 des règles. Ledit gestionnaire 21 des règles est sollicité par ledit administrateur 12 de données et par ledit dispositif importateur 16. Comme mentionné précédemment, grâce aux liens et aux règles datés, chaque élément existant dans la base 15 de données est caractérisé par une période de validité.

Chacune des règles est représentée par un code et ledit code est affecté à chacune des tables de données pour laquelle ladite règle s'applique. Lesdites règles existantes et lesdits codes sont sauvegardées dans la base 15 de données. De ce fait, il est possible de paramétrer chacune des règles pour chaque table de données ou de désactiver au moins une règle pour une table de données en particulier. Il est également possible d'ajouter un nouveau code, c'est-à-dire de modifier le "modèle", sans modifier directement ledit système de gestion de tables grâce audit paramétrage.

La vérification des règles est effectuée uniquement par le gestionnaire 21 des règles, qui centralise cette fonction. Le contrôle de la conformité des règles datées est centralisé uniquement dans ledit gestionnaire 21 des règles. Lorsque ledit gestionnaire des règles vérifie la cohérence d'une création ou d'une modification d'un élément de la base de données, ledit élément devient publiable. En fonction de l'action en cours de réalisation, sont vérifiés les règles correspondant à ladite action, le contexte de l'action (création, modification, etc...), etc... Après vérification, en cas de problème, une liste d'erreurs est transmise vers l'utilisateur. Au moins une erreur est transmise vers au moins un utilisateur par ledit gestionnaire des règles après ledit contrôle de conformité. Lesdites erreurs peuvent être des erreurs bloquantes, qui arrêtent la procédure en cours, ou bien de simples avertissements.

Ledit gestionnaire 21 des règles centralise la vérification des règles, quelque soit l'action en cours. Le gestionnaire 22 des contraintes le sollicite dès qu'une mise à jour est nécessaire, par exemple pour une liste des actions à faire lors d'une fermeture. En cas d'erreur, ledit gestionnaire 22 des contraintes créé les contraintes correspondant audites erreurs détectées par le gestionnaire 21 des règles. Ledit gestionnaire 23 du statut sollicite le gestionnaire 22 des contraintes pour connaître le nombre de contraintes en création correspondant audit élément concerné par l'action. Lors de la création d'un élément, ledit gestionnaire 21 des règles commande l'arrêt de la procédure en cours si une erreur bloquante est détectée.

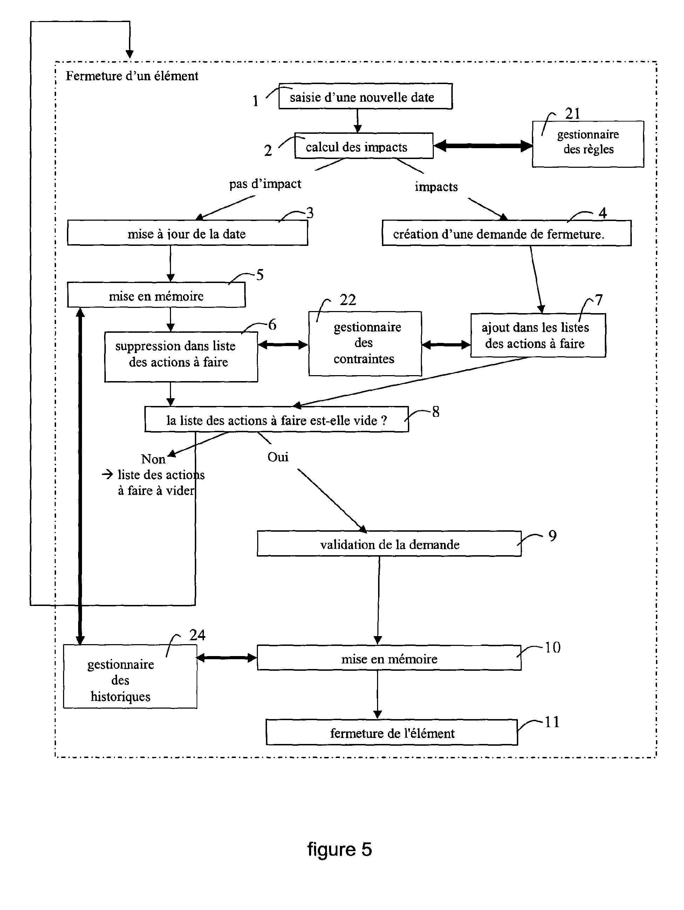

A titre d'exemple complémentaire à celui décrit précédemment, les principales étapes mises en oeuvre par un procédé conforme à l'invention, lors d'au moins une demande de modification sont représentées par la figure 5.

La modification concerne une date de fin de validité (DFV) d'un élément (appelée "fermeture"), pour vérifier la cohérence des dates entre des éléments liés et la mise en cohérence desdites dates suite à la modification. La gestion de la cohérence est très importante lors d'une "fermeture" et permet un système adaptable, qui reste homogène quelque soit les modifications et les différents utilisateurs. Plusieurs utilisateurs habilités peuvent travailler en coopération et, par exemple, être chargés de mises à jour sur des fonctions différentes.

Une modification peut être réalisée sur tout élément dudit système de gestion de tables de données, y compris la suppression dudit élément.

De la même manière que pour la procédure de création, de façon récursive, une fermeture peut être répétée un nombre indéfini de fois par l'activation de la même procédure, c'est-à-dire que ladite fermeture peut créer des incohérences nécessitant la fermeture d'autres éléments hiérarchiques de niveaux inférieurs et ainsi de suite. Lorsque les éléments des niveaux les plus bas ont pu être modifiés, l'utilisateur peut ensuite effectuer une fermeture des éléments en remontant successivement les niveaux de la hiérarchie existante dans la base de données.

Lorsqu'un utilisateur modifie au moins une date de fin de validité (DFV) d'un élément, une demande de modification de date est transmise lors de la procédure de fermeture dudit élément. Une nouvelle date est saisie (étape 1).

Ledit gestionnaire 21 des règles est sollicité et calcule les impacts pour déterminer si la ou les règles de gestion, concernant ledit élément, sont toujours vérifiées dans le cas où la modification demandée serait effectuée (étape 2). S'il n'y a pas d'incohérence vis-à-vis des règles existantes, la modification de la date est effectuée et mise en mémoire dans la base 15 de données (étape 3). La modification de ladite date est sauvegardée par ledit gestionnaire 24 des historiques (étape 4). Si la modification de date résout en particulier une contrainte, celle-ci est supprimée de la liste des actions à faire lors de la fermeture (étape 5). Ladite liste des actions à faire est elle-même sauvegardée dans la base 15 de données.

Par contre, si au moins une règle n'est pas respectée, l'utilisateur peut créer une demande de fermeture sur ledit élément qu'il souhaite modifier, appelé élément principal (étape 6). Le gestionnaire 22 des contraintes créé autant de contraintes que de règles non respectées. Lesdites contraintes créées sont ajoutées et sauvegardées dans la liste des actions à faire lors de la fermeture (étape 7).

Pour résoudre une contrainte créée, et donc faire disparaître un élément dans une liste des actions à faire lors d'une fermeture, un utilisateur doit effectuer la fermeture dudit élément. Comme mentionné précédemment, une demande de fermeture d'un élément principal peut commander la création d'autres demandes de fermeture sur des éléments de niveaux hiérarchiques inférieurs dans la base de données. Toutes les demandes de fermeture doivent être effectuées à partir des niveaux inférieurs de la hiérarchie. Toutes les contraintes doivent être résolues pour vider la liste des actions à faire correspondant audit élément principal à modifier. Autant de demande de fermeture d'un élément sont donc effectuées jusqu'à ce que ladite liste des actions à faire soit vide.

Quand toutes les contraintes créées ou générées par une même demande de fermeture sont résolues, ladite demande de modification est valable car la liste des actions à faire est vide (étape 8). La demande de modification peut alors être validée (étape 9). Ladite fermeture est sauvegardée dans la base 15 de données par ledit gestionnaire 24 des historiques, avec la nouvelle date de fin de validité (DFV) de l'élément principal (étape 10). Ledit l'élément principal, que l'utilisateur a souhaité modifier, est effectivement fermé (étape 11).

Si ledit élément faisait préalablement l'objet d'une contrainte pour une autre demande de fermeture de niveau supérieur, ladite contrainte est alors résolue. L'ensemble des contraintes est résolu du niveau le plus bas vers le niveau le plus haut de la hiérarchie dans la base de données.

De façon similaire, les principales étapes du procédé de gestion des tables sont identiques dans le cas de la modification d'une autre date existant dans la base 15 de données ou bien la modification de la période de validité d'un élément. De même, dans le cas de la modification du "modèle" lors d'une re-affectation, le sens défini dans les liens datés peut être modifié, dont la modification du "père" pour un "fils", par exemple lorsque qu'une agence existante anciennement rattachée à un centre X est rattachée à un centre Y.

## Revendications

1. Procédé de gestion d'un ensemble de tables de données mises en mémoire dans au moins une base (15) de données, **caractérisé en ce que** ledit procédé comporte les étapes consistant à :
- créer dans au moins un dispositif constructeur (11) au moins un lien daté pour établir une relation entre au moins deux desdites tables de données en fonction d'au moins une date,
- créer dans ledit dispositif constructeur (11) au moins une règle datée pour contrôler la validité dudit lien daté,
- contrôler dans au moins un administrateur (12) de données la compatibilité d'au moins une desdites tables de données avec au moins un desdits liens datés et une desdites règles datées,
- après ledit contrôle, sauvegarder par au moins un gestionnaire (24) des historiques ledit lien daté et ladite règle datée dans ladite base (15) de données.

2. Procédé de gestion de tables de données selon la revendication 1, **caractérisé en ce que** ladite règle datée comporte au moins une condition à réaliser, séparément ou en combinaison, par lesdits liens datés, par lesdites tables de données.

3. Procédé de gestion de tables de données selon l'une des revendications 1 ou 2, **caractérisé en ce que caractérisé en ce que** ledit lien daté et ladite règle datée, séparément ou en combinaison, comportent au moins une caractéristique concernant une date de validité.

4. Procédé de gestion de tables de données selon l'une quelconque des revendications 1 à 3, **caractérisé en ce que** ledit lien daté décrit au moins un lien avec un sens défini par au moins une table de données source et au moins une table de données cible pour hiérarchiser lesdites tables de données.

5. Procédé de gestion de tables de données selon l'une quelconque des revendications 1 à 4, **caractérisé en ce que**, dans un lien daté, ladite table de données cible est modifiée par rapport à ladite table de données source par ledit dispositif constructeur (11).

6. Procédé de gestion de tables de données selon l'une quelconque des revendications 1 à 5, **caractérisé en ce que** ledit administrateur (12) de données contrôle automatiquement au moins une modification, séparément ou en combinaison, d'une desdites tables de données, d'un desdits liens datés en fonction desdits liens datés.

7. Procédé de gestion de tables de données selon l'une quelconque des revendications 1 à 6, **caractérisé en ce que** ledit gestionnaire (24) des historiques commande automatiquement la mise en mémoire d'au moins une modification avec une date de réalisation de ladite modification.

8. Procédé de gestion de tables de données selon l'une quelconque des revendications 1 à 7, **caractérisé en ce que** ledit gestionnaire (24) des historiques commande au moins un archivage de chacune desdites modifications datées.

9. Procédé de gestion de tables de données selon l'une quelconque des revendications 1 à 8, **caractérisé en ce qu'**au moins un gestionnaire (21) des règles contrôle automatiquement la conformité desdites règles datées en fonction desdits liens datés.

10. Procédé de gestion de tables de données selon l'une quelconque des revendications 1 à 9, **caractérisé en ce que** ledit contrôle de la conformité desdites règles datées est centralisé uniquement dans ledit gestionnaire (21) des règles.

11. Procédé de gestion de tables de données selon l'une quelconque des revendications 1 à 10, **caractérisé en ce qu'**au moins un gestionnaire (22) des contraintes contrôle automatiquement la réalisation d'au moins une condition desdites règles datées en fonction desdits liens datés.

12. Procédé de gestion de tables de données selon l'une quelconque des revendications 1 à 11, **caractérisé en ce qu'**au moins une erreur est transmise vers au moins un utilisateur par ledit gestionnaire (21) des règles après lesdits contrôles.

13. Procédé de gestion de tables de données selon l'une quelconque des revendications 1 à 12, **caractérisé en ce qu'**au moins un gestionnaire (23) du statut créé automatiquement un statut pour autoriser la mise à disposition, séparément ou en combinaison, d'une desdites tables de données, d'un desdits liens datés.

14. Procédé de gestion de tables de données selon l'une quelconque des revendications 1 à 13, **caractérisé en ce que** ladite mise à disposition est autorisée uniquement quand toutes les conditions d'au moins une règle datée sont réalisées.

15. Procédé de gestion de tables de données selon l'une quelconque des revendications 1 à 14, **caractérisé en ce qu'**au moins un gestionnaire des droits modifie au moins un droit d'un utilisateur dudit système de gestion.

16. Procédé de gestion de tables de données selon l'une quelconque des revendications 1 à 15, **caractérisé en ce qu'**au moins un gestionnaire des tâches commande l'interdiction d'accès auxdites tables de données pendant la durée d'une modification.

17. Procédé de gestion de tables de données selon l'une quelconque des revendications 1 à 16, **caractérisé en ce que** ledit dispositif constructeur (11) est paramétrable pour modifier automatiquement, séparément ou en combinaison, ledit administrateur (12) de données, ledit gestionnaire des droits, ledit gestionnaire des tâches, ledit gestionnaire (21) des règles, ledit gestionnaire (22) des contraintes, ledit gestionnaire (23) du statut, ledit gestionnaire (24) des historiques, au moins un dispositif importateur (16), au moins un dispositif exportateur (17).

18. Procédé de gestion de tables de données selon la revendication 17, **caractérisé en ce qu'**au moins une modification génère automatiquement au moins un changement pour la visualisation, séparément ou en combinaison, d'une desdites tables de données, d'un desdits liens datés.

19. Système (10) de gestion d'un ensemble de tables de données mises en mémoire dans au moins une base (15) de données, **caractérisé en ce que** ledit système comprend au moins un dispositif constructeur (11) configuré pour créer au moins un lien daté pour établir une relation entre au moins deux desdites tables de données en fonction d'au moins une date et configuré pour créer au moins une règle datée pour contrôler la validité dudit lien daté, comprend au moins un administrateur (12) de données apte à contrôler la compatibilité d'au moins une desdites tables de données avec au moins un desdits liens datés et une desdites règles datées et comprend au moins un gestionnaire (24) des historiques apte à sauvegarder après ledit contrôle ledit lien daté et ladite règle datée dans ladite base (15) de données.

20. Système (10) de gestion de tables de données selon la revendication 19, **caractérisé en ce que** ledit administrateur (12) de données est configuré pour commander ledit gestionnaire (24) des historiques apte à mettre en mémoire, séparément ou en combinaison, une desdites tables de données, un desdits liens datés.

21. Système (10) de gestion de tables de données selon l'une des revendications 19 ou 20, **caractérisé en ce que** ledit administrateur (12) de données est configuré pour commander au moins un gestionnaire (23) du statut apte à autoriser la mise à disposition, séparément ou en combinaison, d'une desdites tables de données, d'un desdits liens datés.

22. Système (10) de gestion de tables de données selon l'une quelconque des revendications 19 à 21, **caractérisé en ce que** ledit système (10) comprend au moins un dispositif importateur (16) apte à importer des données vers ladite base (15) de données.

23. Système (10) de gestion de tables de données selon l'une quelconque des revendications 19 à 22, **caractérisé en ce que** ledit système (10) comprend au moins un dispositif exportateur (17) apte à exporter des données à partir de ladite base (15) de données.

24. Système (10) de gestion de tables de données selon l'une quelconque des revendications 19 à 23, **caractérisé en ce que** ledit administrateur (12) de données est configuré pour commander au moins un gestionnaire des droits apte à contrôler au moins un droit d'un utilisateur dudit système de gestion.

25. Système (10) de gestion de tables de données selon l'une quelconque des revendications 19 à 24, **caractérisé en ce que** ledit administrateur (12) de données est configuré pour commander au moins un gestionnaire des tâches apte à gérer au moins une modification, séparément ou en combinaison, d'une desdites tables de données, d'un desdits liens datés.

26. Système (10) de gestion de tables de données selon l'une quelconque des revendications 19 à 25, **caractérisé en ce que** ledit administrateur (12) de données est configuré pour commander au moins un gestionnaire (21) des règles apte à contrôler la conformité desdites tables de règles.

27. Système (10) de gestion de tables de données selon l'une quelconque des revendications 19 à 26, **caractérisé en ce que** ledit administrateur (12) de données est configuré pour commander au moins un gestionnaire (22) des contraintes apte à contrôler la réalisation d'au moins une condition d'une table de règles.
